# FASCICULE DE BREVET EUROPEEN

(11) **EP 0 462 867 B1**
(45) Date de publication et mention de la délivrance du brevet: **04.05.1994**
(21) Numéro de dépôt: 91401510.2
(22) Date de dépôt: 10.06.1991
(51) Int. Cl.: B60T 8/26, B60T 8/88, B60T 8/96

(54) **Système de freinage à commande hydraulique et correcteur associé**
Hydraulisches Bremssystem mit zugehörigem Druckminderventil
Hydraulic brake system with proportional valve

(30) Priorité: 20.06.1990 FR 9007696
(43) Date de publication de la demande: 27.12.1991
(73) Titulaire: ALLIEDSIGNAL EUROPE SERVICES TECHNIQUES, 93700 Drancy (FR)
(72) Inventeur: Moinard, Patrice, BENDIX EUROPE, F-93700 Drancy (FR); Castel, Philippe, BENDIX EUROPE, F-93700 Drancy (FR); Pichon, Jean-Michel, BENDIX EUROPE, F-93700 Drancy (FR)
(74) Mandataire: Bentz, Jean-Paul

(56) Documents cités:
- EP-A- 0 368 359
- DE-A- 3 419 311
- FR-A- 2 569 382
- FR-A- 2 624 462
- GB-A- 2 188 112

## Description

La présente invention concerne les systèmes de freinage à commande hydraulique pour véhicules automobiles comprenant un maître-cylindre, un correcteur destiné à réduire la pression régnant dans les freins de roues arrière par rapport à celle régnant dans les freins de roues avant et un dispositif d'antiblocage des roues.

De tels systèmes sont connus de l'homme du métier. Le document FR-B-2 550 747 décrit, par exemple, un tel système dans lequel le correcteur est mis hors service lorsque le dispositif d'antiblocage des roues entre en fonctionnement et prend le contrôle du circuit de freinage. Toutefois, cette mise hors service du correcteur s'accompagne d'une brusque augmentation de la pression dans les freins de roues arrière avant que le dispositif d'antiblocage puisse agir correctement. Cette brusque augmentation est tout-à-fait nuisible à un freinage dans de bonnes conditions de sécurité et de confort.

Pour pallier ce problème, le document FR-A-2 624 462 propose de mettre normalement en court-circuit le correcteur dès que le véhicule ainsi équipé roule une pression maximale étant appliquée aux freins de roues arrière et modulée par le dispositif d'antiblocage et de ne mettre le correcteur en service qu'en cas de défaillance du dispositif d'antiblocage.

Le document FR-A-2 571 326 propose une variante de cette solution selon laquelle le correcteur est totalement inhibé en fonctionnement normal. Toutefois cela revient à faire fonctionner très souvent le dispositif d'antiblocage dès que le véhicule doit freiner. Or un dispositif d'antiblocage est un élément fragile dont un fonctionnement trop fréquent réduit la durée de vie en soumettant ses composants à une usure prématurée.

GB-A-2 188 112 décrit un autre type de correcteur permettant d'assurer une détente de la pression dans le moteur de frein en cas d'imminence de blocage de la roue correspondante. Au contraire, FR-A-2 569 382 décrit un dispositif permettant de maintenir la pression dans le moteur de frein d'une roue arrière lorsque l'imminence d'un blocage d'une roue avant d'un même circuit est détectée.

La présente invention a pour but d'obvier à ces inconvénients en mettant en oeuvre un correcteur fonctionnant en permanence pour réduire la pression dans les freins de roues arrière, la pression d'intervention étant toutefois modifiée en cas de défaillance du dispositif d'antiblocage pour assurer une sécurité maximale sans nuire au confort.

Selon l'invention, le correcteur est donc du type à décalage piloté du point de coupure, le point de coupure lors du fonctionnement du dispositif d'antiblocage présentant une valeur déterminée supérieure à celle d'un correcteur équipant le véhicule sans dispositif d'antiblocage des roues, tandis qu'elle est sensiblement égale à cette dernière en cas de défaillance du système.

Le dispositif d'antiblocage n'est alors que peu utilisé comme correcteur. La durée de vie du dispositif est ainsi protégée et la sécurité du freinage est maximale.

L'invention concerne également un correcteur du type précité.

L'invention sera mieux comprise et d'autres buts, avantages et caractéristiques apparaîtront plus clairement à la lecture de la description qui suit d'un mode de réalisation préféré donné à titre non limitatif et à laquelle une planche de dessin est jointe sur laquelle :
- Les Figures 1 et 2 représentent schématiquement deux modes de réalisation d'un correcteur à pilotage électrique selon l'invention et
- La Figure 3 représente schématiquement un mode de réalisation d'un correcteur à pilotage hydraulique conforme à l'invention.

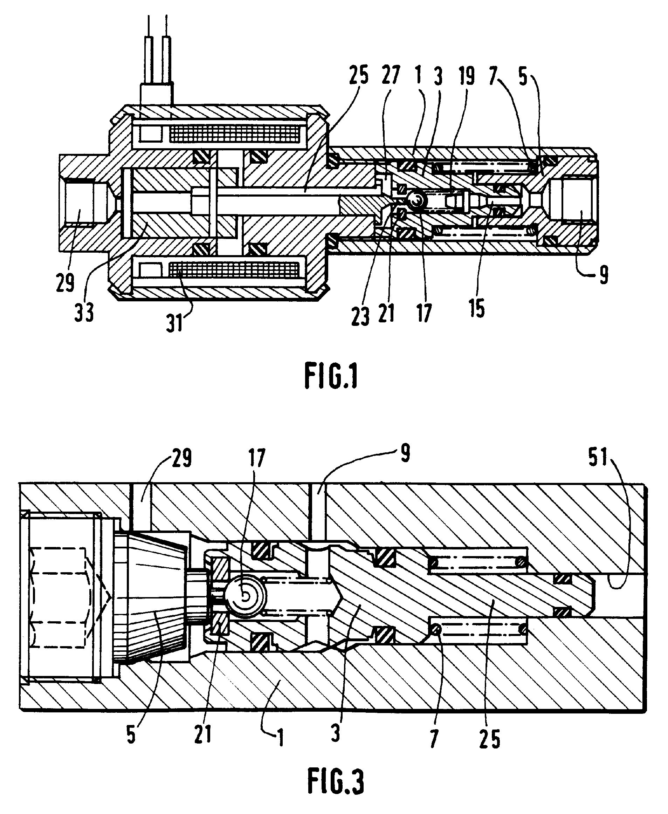

En référence maintenant à la Figure 1, le correcteur est constitué par un corps 1 dans lequel a été pratiqué un alésage. Un piston étagé 3 coulisse dans cet alésage. Un bouchon 5 fermant l'alésage comporte lui-même un alésage dans lequel coulisse la partie de plus petit diamètre du piston étagé 3. Un ressort 7 maintient en éloignement le piston 3 et le bouchon 5.

L'entrée 9 constituée par un orifice pratiqué dans le bouchon 5 est reliée à une sortie du maître-cylindre (non représenté). Le piston 3 comporte un canal interne 15 reliant ses deux faces. Dans ce canal 15 est disposée une bille 17 formant clapet rappelée par un ressort 19 sur un siège 21 solidaire du piston 3.

Une aiguille 23, solidaire d'un poussoir 25, est susceptible de venir ouvrir le clapet 17 en poussant sur celui-ci.

La chambre 27, en regard de la face de plus grand diamètre du piston 3, est connectée à la sortie 29 du correcteur, laquelle est reliée à au moins un moteur de frein des roues arrière.

Un solenoïde 31 relié à une source de courant électrique est susceptible de mouvoir un noyau magnétique 33 solidaire du poussoir 25.

En fonctionnement normal du système de freinage complet ou seulement lors du fonctionnement normal du dispositif d'antiblocage, c'est-à-dire en cas de non-défaillance du dispositif d'antiblocage des roues associé, le solenoïde 31 est excité, ce qui entraîne un déplacement, vers la droite sur la Figure, de l'ensemble constitué du noyau 33, du poussoir 25 et de l'aiguille 23 qui tend à repousser le clapet 17 plus loin de son siège.

Lors d'un freinage, un fluide sous pression est appliqué à l'entrée 9 du correcteur et se propage, par le canal 15 jusque dans la chambre 27 et la sortie 29 puisque le clapet est alors ouvert. L'augmentation de la pression tend à faire coulisser le piston 3 vers la droite sur la Figure, à l'encontre du ressort 7 en vue de fermer le clapet de communication. Le clapet se ferme effectivement lorsque l'effet de la pression dans la chambre 27 équilibre les effets conjugués du ressort 7 et de la pression à l'entrée 9.

On a ainsi un correcteur de fonctionnement classique.

Le point de coupure du correcteur, déterminé par la première fermeture du clapet, peut être ajusté, dans l'exemple représenté, par vissage du bouchon 5 qui est alors fileté et coopère avec un taraudage correspondant dans l'alésage. Un tel vissage ou dévissage a pour effet de modifier la précontrainte du ressort 7 s'opposant à la fermeture du clapet.

Le point de coupure peut également être ajusté en fonction de la charge supportée par les roues arrière du véhicule en substituant au bouchon représenté un piston piloté par cette charge.

En cas de défaillance du dispositif d'antiblocage ou en cas de défaillance d'un élément du circuit électrique, le solenoïde 31 est désexcité, ce qui a pour effet de ramener l'ensemble constitué par le noyau 33, le poussoir 25 et l'aiguille 23 vers la gauche sur la Figure grâce à l'action du ressort de clapet 19 ou d'un ressort auxiliaire non représenté. Le clapet 17 se rapproche alors de son siège 21, ce qui diminue la course du piston 3 nécessaire à la fermeture du clapet, et par suite la charge du ressort 7 correspondante, donc ce qui ramène le point de coupure précité à un niveau inférieur au niveau précédent.

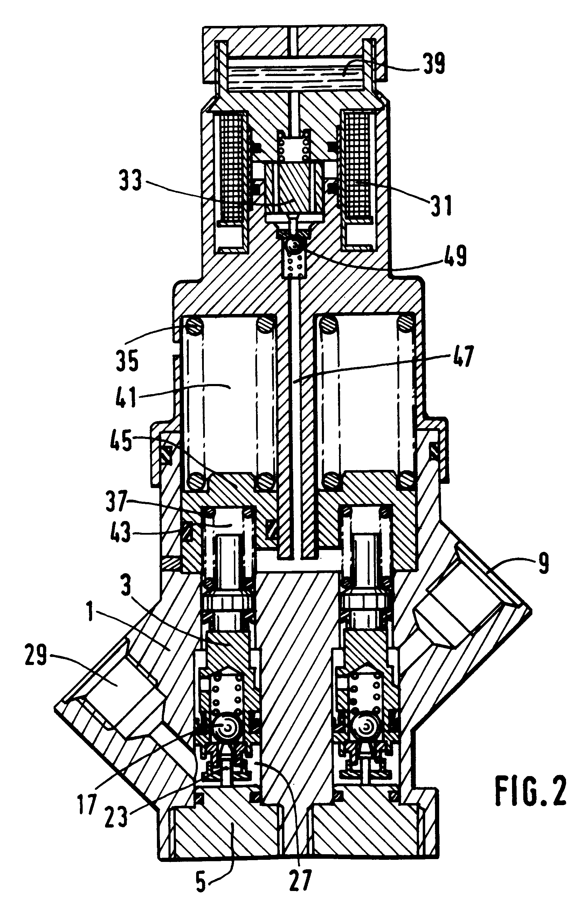

Sur la Figure 2, on a représenté un correcteur double, bien que le mode de réalisation puisse être aussi appliqué à un correcteur simple. Les deux points de coupure sont ici définis chacun par la précontrainte appliquée à un ressort respectivement 35, 37.

Les deux ressorts sont disposés en série et sont respectivement enfermés dans une chambre à volume variable, respectivement 41, 43. Entre ces deux chambres, un piston 45 sert d'appui aux ressorts et assure l'isolation d'une chambre par rapport à l'autre.

Dans l'exemple représenté, le ressort 37 présente une charge en place moindre que celle du ressort 35.

Un conduit 47 pratiqué dans le corps 1 relie la chambre 43 dans laquelle est enfermé le ressort 37 de moindre charge en place avec un réservoir 39 de fluide incompressible, par l'intermédiaire d'une électrovalve ici constituée par un solenoïde 31 pilotant un noyau 33 ouvrant ou fermant un clapet 49.

Ainsi, en fonctionnement normal du système de freinage complet ou bien seulement lors du fonctionnement normal du dispositif d'antiblocage, le solenoïde 31 est excité et le clapet 49 est fermé, isolant ainsi la chambre 43 qui constitue alors un mur hydraulique. De ce fait, c'est la charge en place du ressort 35 qui définit le point de coupure du correcteur, c'est-à-dire un point de coupure élevé.

En défaillance, le solenoïde 31 est désexcité et le clapet 49 s'ouvre. C'est alors la charge en place moindre du ressort 37 qui définit le nouveau point de coupure, c'est-à-dire un point de coupure bas.

On obtient donc bien ainsi un correcteur à deux points de coupure distincts, du type à décalage piloté.

De préférence, le point de coupure choisi en cas de non défaillance du dispositif d'antiblocage est voisin de celui requis en pleine charge du véhicule. En cas de défaillance du dispositif d'antiblocage ou en cas de défaillance d'un élément du circuit électrique, le point de coupure choisi est celui qui aurait été choisi si le véhicule n'était pas équipé d'un tel dispositif d'antiblocage et correspond sensiblement à celui requis pour le véhicule à vide. Ainsi le passage de l'un à l'autre point de coupure assure une parfaite sécurité du freinage quelque soit l'état du dispositif d'antiblocage.

Figure 3 on a représenté un correcteur du même type, mais à pilotage hydraulique, permettant ainsi de ne pas mettre en oeuvre un solénoïde additionnel. Sur cette Figure 3, les mêmes éléments que précédemment décrits portent les mêmes références.

Ici, le piston étagé 3 est solidaire du poussoir 25. Ce poussoir 25 coulisse de façon étanche dans une partie étagée 51 de l'alésage pratiqué dans le corps 1. A l'extrémité de ce poussoir 25 est appliqué le fluide sous haute pression délivré par la source associée au dispositif d'antiblocage.

Cette source est généralement une pompe conventionnelle alimentant les moteurs de frein en fluide approprié. Ainsi, lorsque la pompe du dispositif d'antiblocage se met en fonctionnement, une force additionnelle est appliquée au poussoir 25 dans le même sens que le ressort 7, s'opposant à la fermeture du clapet 17. Le correcteur continue donc à fonctionner de manière conventionnelle mais son point de coupure est modifié en fonction de la pression du fluide appliqué à l'extrémité du poussoir 25.

D'une manière favorable, cette pression est une fonction continue simple de la pression régnant dans la chambre de travail correspondante du maître-cylindre. On peut ainsi, par un choix judicieux des sections des alésages et, notamment, de l'alésage 51, éviter les à-coups et les brusques augmentations de pression dans les freins lorsque le dispositif d'antiblocage se met en route, tout en continuant à profiter des avantages de la mise en série d'un correcteur dans le circuit des freins de roues arrière.

Bien évidemment, comme on peut le constater, en cas de défaillance du dispositif d'antiblocage, le correcteur fonctionne exactement comme lorsque le dispositif d'antiblocage n'est pas activé, ce qui assure une parfaite sécurité du freinage.

## Revendications

1. Système de freinage à commande hydraulique pour véhicule automobile comprenant un maître-cylindre, un correcteur destiné à réduire la pression régnant dans les freins de roues arrière par rapport à celle régnant dans les roues avant, et un dispositif d'antiblocage des roues comprenant une source de fluide sous haute pression, caractérisé en ce que le correcteur est du type à décalage piloté du point de coupure, le point de coupure lors du fonctionnement du dispositif d'antiblocage présentant une valeur déterminée supérieure à celle d'un correcteur équipant le véhicule sans dispositif d'antiblocage des roues, tandis qu'elle est sensiblement égale à cette dernière en cas de défaillance du dispositif d'antiblocage.

2. Système de freinage à commande hydraulique selon la revendication 1, caractérisé en ce que le décalage est piloté électriquement.

3. Système de freinage à commande hydraulique selon la revendication 2, caractérisé en ce que le point de coupure lors du fonctionnement du dispositif d'antiblocage est voisin de celui requis en pleine charge du véhicule.

4. Système de freinage à commande hydraulique selon la revendication 3, caractérisé en ce que le point de coupure en fonctionnement normal du système est voisin de celui requis en pleine charge du véhicule.

5. Système de freinage à commande hydraulique selon la revendication 1 , caractérisé en ce que le décalage est piloté hydrauliquement.

6. Système de freinage à commande hydraulique selon l'une quelconque des revendications 2 à 4, caractérisé en ce que ledit correcteur est constitué par un corps (1) dans lequel a été pratiqué un alésage étagé où coulisse un piston étagé (3) portant un siège (21) de clapet (17) commandant une communication entre une entrée (9) et une sortie (29) du dit correcteur, un poussoir (25) dont la position détermine le point de coupure du dit correcteur, un ressort (7) disposé dans une chambre à volume variable, s'opposant à la fermeture du dit clapet sous l'effet de la pression à l'entrée du correcteur, caractérisé en ce que la position du dit poussoir (25) est commandée par un moyen électro-magnétique (31, 33), le dit poussoir (25) portant un moyen d'ouverture (23) du dit clapet.

7. Système de freinage à commande hydraulique selon la revendication 5, caractérisé en ce que ledit correcteur est constitué par un corps (1) dans lequel a été pratiqué un alésage étagé où coulisse un piston étagé (3) portant un siège (21) de clapet (17) commandant une communication entre une entrée (9) et une sortie (29) du dit correcteur, un poussoir (25) dont la position détermine le point de coupure du dit correcteur, un ressort (7) disposé dans une chambre à volume variable, s'opposant à la fermeture du dit clapet sous l'effet de la pression à l'entrée du correcteur, caractérisé en ce que le fluide sous haute pression du dit dispositif d'antiblocage est simultanément appliqué au dit poussoir (25) et à la dite entrée (9) du dit correcteur, de manière à agir dans le même sens que le dit ressort (7).

8. Système de freinage à commande hydraulique selon la revendication 6 ou 7, caractérisé en ce que le dit alésage est fermé par un moyen (5) dont la position détermine une charge en place déterminée du dit ressort (7).

9. Système de freinage à commande hydraulique selon la revendication 8, caractérisé en ce que le dit moyen est un bouchon (5) fileté coopérant avec un taraudage pratiqué dans l'extrémité du dit alésage.

10. Système de freinage à commande hydraulique selon la revendication 9, caractérisé en ce que le dit moyen est un piston piloté par la charge supportée par les dites roues arrière.

11. Système de freinage à commande hydraulique selon la revendication 3, caractérisé en ce que ledit correcteur est constitué par un corps (1) dans lequel a été pratiqué un alésage étagé où coulisse un piston étagé (3) portant un siège (21) de clapet (17) commandant une communication entre une entrée (9) et une sortie (29) du dit correcteur et un poussoir (25) dont la position détermine le point de coupure du dit correcteur, un premier ressort (37) disposé dans une première chambre à volume variable (43), s'opposant à la fermeture du dit clapet sous l'effet de la pression à l'entrée du correcteur, caractérisé en ce qu'un deuxième ressort (35) qui présente une charge en place différente de celle du dit premier ressort (37) est disposé dans une deuxième chambre à volume variable (41) en série avec la dite première chambre (43), la chambre (43) enfermant le ressort de moindre charge en place (37) étant reliée à un réservoir (39) de fluide par l'intermédiaire d'une électrovalve de façon à constituer un mur hydraulique lorsque le clapet (49) de la dite électrovalve est fermé, les deux chambres (41, 43) étant isolées l'une de l'autre.

## Patentansprüche

1. Hydraulisch gesteuertes Bremssystem für Kraftfahrzeuge, mit einem Hauptzylinder, einem Regler, der dazu vorgesehen ist, den in den hinteren Radbremsen herrschenden Druck im Vergleich zu dem in den vorderen Rädern herrschenden Druck zu vermindern, und einer Rad-Antiblockiervorrichtung mit einer Quelle für Fluid unter hohem Druck, dadurch gekennzeichnet, daß der Regler vom Typ mit einer gesteuerten Verschiebung des Eingriffspunktes ist, wobei der Eingriffspunkt beim Betrieb der Antiblockiervorrichtung einen bestimmten Wert besitzt, der größer als der eines Reglers ist, mit dem das Fahrzeug ohne Rad-Antiblockiervorrichtung ausgestattet ist, während dieser Wert im Falle eines Ausfalls der Antiblockiervorrichtung im wesentlichen gleich dem Wert des letztgenannten Reglers ist.

2. Hydraulisch gesteuertes Bremssystem nach Anspruch 1, dadurch gekennzeichnet, daß die Verschiebung elektrisch gesteuert wird.

3. Hydraulisch gesteuertes Bremssystem nach Anspruch 2, dadurch gekennzeichnet, daß beim Betrieb der Antiblockiervorrichtung der Eingriffspunkt in der Nähe des Eingriffspunktes liegt, der bei vollständiger Beladung des Fahrzeugs nötig ist.

4. Hydraulisch gesteuertes Bremssystem nach Anspruch 3, dadurch gekennzeichnet, daß beim normalen Betrieb des Systems der Eingriffspunkt in der Nähe des Eingriffspunktes liegt, der bei vollständiger Beladung des Fahrzeugs nötig ist.

5. Hydraulisch gesteuertes Bremssystem nach Anspruch 1, dadurch gekennzeichnet, daß die Verschiebung hydraulisch gesteuert wird.

6. Hydraulisch gesteuertes Bremssystem nach einem der Ansprüche 2 bis 4, dadurch gekennzeichnet, daß der Regler durch einen Körper (1) gebildet ist, in dem eine Stufenbohrung gebildet worden ist, in der ein Stufenkolben (3) gleitet, der einen Sitz (21) für ein Ventilelement (17) trägt, das eine Verbindung zwischen einem Eingang (9) und einem Ausgang (29) des Reglers steuert, sowie einen Stößel (25), dessen Position den Eingriffspunkt des Reglers bestimmt, wobei eine Feder (7), die in einer Kammer mit veränderbarem Volumen angeordnet ist, dem Schließen des Ventilelements unter der Wirkung des Druckes am Eingang des Reglers entgegenwirkt, dadurch gekennzeichnet, daß die Position des Stößels (25) durch ein elektromagnetisches Mittel (31, 33) gesteuert wird, wobei der Stößel (25) ein Öffnungsmittel (23) für das Ventilelement trägt.

7. Hydraulisch gesteuertes Bremssystem nach Anspruch 5, dadurch gekennzeichnet, daß der Regler durch einen Körper (1) gebildet ist, in dem eine Stufenbohrung gebildet worden ist, in der ein Stufenkolben (3) gleitet, der einen Sitz (21) für ein Ventilelement (17) trägt, das eine Verbindung zwischen einem Eingang (9) und einem Ausgang (29) des Reglers steuert, sowie einen Stößel (25), dessen Position den Eingriffspunkt des Reglers bestimmt, wobei eine Feder (7), die in einer Kammer mit veränderbarem Volumen angeordnet ist, dem Schließen des Ventilelements unter der Wirkung des Druckes am Eingang des Reglers entgegenwirkt, dadurch gekennzeichnet, daß das Fluid unter hohem Druck der Antiblockiervorrichtung gleichzeitig an den Stößel (25) und an den Eingang (9) des Reglers in der Weise angelegt wird, daß es in der gleichen Richtung wie die Feder (7) wirkt.

8. Hydraulisch gesteuertes Bremssystem nach Anspruch 6 oder 7, dadurch gekennzeichnet, daß die Bohrung durch ein Mittel (5) verschlossen ist, dessen Position eine bestimmte Einbaubelastung der Feder (7) bestimmt.

9. Hydraulisch gesteuertes Bremssystem nach Anspruch 8, dadurch gekennzeichnet, daß das Mittel ein Schraubstopfen (5) ist, der mit einem im Ende der Bohrung gebildeten Innengewinde zusammenwirkt.

10. Hydraulisch gesteuertes Bremssystem nach Anspruch 9, dadurch gekennzeichnet, daß das Mittel ein Kolben ist, der von der von den hinteren Rädern getragenen Last gesteuert wird.

11. Hydraulisch gesteuertes Bremssystem nach Anspruch 3, dadurch gekennzeichnet, daß der Regler durch einen Körper (1) gebildet ist, in dem eine Stufenbohrung gebildet worden ist, in der ein Stufenkolben (3) gleitet, der einen Sitz (21) für ein Ventilelement (17) trägt, das eine Verbindung zwischen einem Eingang (9) und einem Ausgang (29) des Reglers steuert, sowie einen Stößel (25), dessen Position den Eingriffspunkt des Reglers bestimmt, wobei eine Feder (7), die in einer Kammer mit veränderbarem Volumen angeordnet ist, dem Schließen des Ventilelements unter der Wirkung des Druckes am Eingang des Reglers entgegenwirkt, dadurch gekennzeichnet, daß in einer zweiten Kammer (41) mit veränderbarem Volumen, die sich in Reihe mit der zweiten Kammer (43) befindet, eine zweite Feder (35) angeordnet ist, die eine Einbaubelastung aufweist, die von der der ersten Feder (37) verschieden ist, wobei die Kammer (43), die die Feder (37) mit der geringeren Einbaubelastung umschließt, mit einem Fluidvorratsbehälter (39) über ein Elektroventil verbunden ist, um eine hydraulische Sperre zu bilden, wenn das Ventilelement (49) des Elektroventils geschlossen ist, wodurch die beiden Kammern (41, 43) voneinander isoliert sind.

## Claims

1. Hydraulically controlled brake system for a motor vehicle, comprising a master cylinder, a corrector intended for reducing the pressure prevailing in the rear-wheel brakes in relation to that prevailing in the front wheels, and a wheel anti-lock device comprising a source of fluid under high pressure, characterized in that the corrector is of the type with a controlled shift of the cut-off point, during the operation of the anti-lock device the cut-off point having a specific value higher than that of a corrector equipping the vehicle without a wheel anti-lock device, whilst it is substantially equal to the latter in the event of a failure of the anti-lock device.

2. Hydraulically controlled brake system according to Claim 1, characterized in that the shift is controlled electrically.

3. Hydraulically controlled brake system according to Claim 2, characterized in that, during the operation of the anti-lock device, the cut-off point is in the neighbourhood of that required when the vehicle is under full load.

4. Hydraulically controlled brake system according to Claim 3, characterized in that, during the normal operation of the system, the cut-off point is in the neighbourhood of that required when the vehicle is under full load.

5. Hydraulically controlled brake system according to Claim 1, characterized in that the shift is controlled hydraulically.

6. Hydraulically controlled brake system according to any one of Claims 2 to 4, characterized in that said corrector consists of a body (1), in which has been made a stepped bore where slides a stepped piston (3) carrying a shutter (17) seat (21) controlling communication between an inlet (9) and an outlet (29) of said corrector, a pusher (25), the position of which determines the cut-off point of said corrector, and a spring (7) arranged in a variable-volume chamber and opposing the closing of said shutter under the effect of the pressure at the inlet of the corrector, characterized in that the position of said pusher (25) is controlled by an electromagnetic means (31, 33), said pusher (25) carrying a means (23) for opening said shutter.

7. Hydraulically controlled brake system according to Claim 5, characterized in that said corrector consists of a body (1) in which has been made a stepped bore where slides a stepped piston (3) carrying a shutter (17) seat (21) controlling communication between an inlet (9) and an outlet (29) of said corrector, a pusher (25), the position of which determines the cut-off point of said corrector, and a spring (7) arranged in a variable-volume chamber and opposing the closing of said shutter under the effect of the pressure at the inlet of the corrector, characterized in that the fluid under high pressure of said anti-lock device is simultaneously applied to said pusher (25) and to said inlet (9) of said corrector, so as to act in the same direction as said spring (7).

8. Hydraulically controlled brake system according to Claim 6 or 7, characterized in that said bore is closed by a means (5), the position of which determines a specific load in place of said spring (7).

9. Hydraulically controlled brake system according to Claim 8, characterized in that said means is a threaded plug (5) interacting with an internal thread made in the end of said bore.

10. Hydraulically controlled brake system according to Claim 9, characterized in that said means is a piston controlled by the load supported by said rear wheels.

11. Hydraulically controlled brake system according to Claim 3, characterized in that said corrector consists of a body (1) in which has been made a stepped bore where slides a stepped piston (3) carrying a shutter (17) seat (21) controlling communication between an inlet (9) and an outlet (29) of said corrector and a pusher (25), the position of which determines the cut-off point of said corrector, and a first spring (37) arranged in a first variable-volume chamber (43) and opposing the closing of said shutter under the effect of the pressure at the inlet of the corrector, characterized in that a second spring (35) having a load in place different from that of said first spring (37) is arranged in a second variable-volume chamber (41) in series with said first chamber (43), the chamber (43) enclosing the spring of lower load in place (37) being connected to a fluid reservoir (39) by means of a solenoid valve, so as to constitute a hydraulic wall when the shutter (49) of said solenoid valve is closed, the two chambers (41, 43) being isolated from one another.
